# EUROPEAN PATENT SPECIFICATION

(11) **EP 4 027 321 B1**
(45) Date of publication and mention of the grant of the patent: **09.10.2024**
(21) Application number: 20861292.9
(22) Date of filing: 06.08.2020
(51) Int. Cl.: G09B 29/00, G09B 29/10, G08G 1/09, G08G 1/123, G01C 21/26

(54) **POSITIONAL INFORMATION TRANSMISSION PROGRAM, INFORMATION TERMINAL DEVICE, AND POSITIONAL INFORMATION TRANSMISSION SYSTEM**
PROGRAMM ZUR ÜBERTRAGUNG VON POSITIONSINFORMATIONEN, INFORMATIONSENDGERÄT UND SYSTEM ZUR ÜBERTRAGUNG VON POSITIONSINFORMATIONEN
PROGRAMME DE TRANSMISSION D'INFORMATIONS DE POSITION, DISPOSITIF TERMINAL D'INFORMATIONS ET SYSTÈME DE TRANSMISSION D'INFORMATIONS DE POSITION

(30) Priority: 04.09.2019 JP 2019161490
(43) Date of publication of application: 13.07.2022
(73) Proprietor: Kawasaki Motors, Ltd., Akashi-shi, Hyogo 673-8666 (JP)
(72) Inventor: KINUHATA, Masanori, Akashi-shi, Hyogo 673-8666 (JP)
(74) Representative: Witte, Weller & Partner Patentanwälte mbB
(86) International application number: PCT/JP2020/030247
(87) International publication number: WO 2021/044800

(56) References cited:
- WO-A1-2015/156018
- JP-A- 2016 180 736
- JP-A- 2019 105 909
- JP-A- 2019 125 167
- US-A1- 2013 137 476
- US-A1- 2013 281 112

## Description

### Technical Field

The present invention relates to a positional information transmitting program, an information terminal, and a positional information transmitting system.

### Background Art

A system that displays the position of a user who has an information terminal, on a map on a display has been conventionally proposed (see PTL 1, for example).

PTL 2 discloses a mobile terminal apparatus that implements, via a server apparatus, group communication that is communication among members belonging to a same group. The mobile terminal apparatus generates a group selection image used for selecting an objective group for which the group communication is implemented. The group selection image includes: a selection candidate image indicating one or more candidate groups that are selection candidates for the objective group; and a location image including a map image and an icon image indicating a member belonging to one candidate group among the one or more candidate groups, at a location corresponding to positioning information of the member, on the map image.

### Citation List

### Patent Literature

PTL 1: Japanese Patent No. 5967243
PTL 2: US 2013/0137476 A1

### Summary of Invention

### Technical Problem

According to the technology disclosed in PTL 1, the information terminal transmits positional information acquired by a GPS receiver, to a server. The server receives the positional information transmitted from the information terminals. Since the positional information is transmitted regardless of the situation of the user, it is difficult to utilize the positional information as useful information.

An object of the present invention is to provide a positional information transmitting program, an information terminal, and a positional information transmitting system, each of which facilitates the utilization of positional information of terminals accumulated in a server.

### Solution to Problem

To solve the above problems, a positional information transmitting program according to claim 1 is a positional information transmitting program executed by a computer in a system. The system includes: a first terminal carried by a user; a moving machine; a second terminal; and a server including a server communicator communicable with a terminal communicator of the first terminal and a terminal communicator of the second terminal. The positional information transmitting program transmits positional information of the first terminal from the first terminal through the server to the second terminal. The positional information transmitting program makes the computer serve as: a situation determiner that determines based on moving machine detection information output from the moving machine whether or not the user is in a nearby range preset for the moving machine; a positional information acquirer that acquires positional information indicating a position of the first terminal; and a transmission controller that controls at least one of the terminal communicator or the server communicator to transmit the positional information from the first terminal through the server to the second terminal in such a transmission mode that whether or not the user is in the nearby range is determinable. The positional information transmitting program makes the computer further serve as a position determiner that determines whether or not the positional information acquired by the positional information acquirer satisfies a preset condition. When the situation determiner determines that the user is in the nearby range, and the position determiner determines that the positional information satisfies the preset condition, the transmission controller controls at least one of the terminal communicator or the server communicator not to transmit the positional information from the first terminal through the server to the second terminal.

According to the above positional information transmitting program, whether or not the user at a position corresponding to the positional information transmitted to the second terminal is in the nearby range of the moving machine is determinable by the second terminal. Therefore, the positional information can be easily utilized as useful information. For example, the users who are on the moving machines except for the users who are away from the moving machines can be easily found by the second terminal based on the server information.

According to the positional information transmitting program, the positional information of the first terminal is transmitted or not transmitted to the second terminal in accordance with a preset condition. For example, the condition determined by the position determiner is set to a condition that the position corresponding to the acquired positional information is in a preset range, such as a range around the home of the user. With this, when the user is in the range around the home, the positional information is not transmitted to the second terminal. Therefore, security can be improved.

In the above positional information transmitting program, the second terminal may include a display, and the display may display a map and a position of the user on the map at a position corresponding to the positional information in such a display mode that whether or not the user is in the nearby range is determinable by the situation determiner. With this, for example, the users who are on the moving machines except for the users who are away from the moving machines can be easily found by the second terminal based on the server information.

In the above positional information transmitting program, the positional information transmitting program may make the computer further serve as a traveling information acquirer that is related to traveling of the moving machine and acquires traveling information generated by the moving machine, and the transmission controller may control at least one of the terminal communicator or the server communicator to transmit the traveling information together with the positional information. With this, the server can store the traveling information of the moving machine on which the user rides, and the traveling information can be utilized as the useful information together with the positional information of the moving machine.

In the above positional information transmitting program, the positional information transmitting program may make the computer further serve as a moving machine type acquirer that acquires moving machine type information corresponding to a type of the moving machine, and the transmission controller may control at least one of the terminal communicator or the server communicator to transmit the moving machine type information together with the positional information. With this, the server can store information corresponding to the type of the moving machine, and such information can be utilized as the useful information together with the positional information of the moving machine.

In the above positional information transmitting program, the positional information transmitting program may make the computer further serve as a user type acquirer that acquires user type information corresponding to a type of the user specified from preset user types, and the transmission controller may control at least one of the terminal communicator or the server communicator to transmit the user type information together with the positional information. With this, the server can store information corresponding to the type of the user, and such information can be utilized as the useful information together with the positional information of the moving machine.

The first terminal may include a receiver that receives moving machine detection information transmitted through wireless communication from a moving machine transmitter disposed at the moving machine. When the receiver receives the moving machine detection information, the situation determiner may determine that the user is in the nearby range. When the receiver does not receive the moving machine detection information, the situation determiner may determine that the user is not in the nearby range. With this, the situation determiner can determine in accordance with the presence or absence of the reception of the moving machine detection information whether or not the user is in the nearby range. Moreover, the receiver receives the moving machine detection information from the moving machine transmitter through wireless communication. Therefore, convenience can be improved more than when, for example, the first terminal is physically connected to the moving machine.

In the position display program, the position display program may make the computer further serve as an elapsed time counter that counts an elapsed time since the situation determiner has determined that the situation in which the user is in the nearby range is changed to the situation in which the user is not in the nearby range. Until the elapsed time counted by the elapsed time counter exceeds a predetermined time even when the situation determiner determines that the user is not in the nearby range, the transmission controller may control at least one of the terminal communicator or the server communicator to transmit the positional information from the first terminal through the server to the second terminal. The probability that the moving machine is located close to the position of the first terminal is high while an elapsed time since the situation determiner has determined that the user has moved out from the nearby range R is not so long. Therefore, according to the above program, even when the user is not in the preset nearby range, the positional information of the user can be utilized on the assumption that the moving machine is located close to some extent to the position corresponding to the positional information.

An information terminal according to claim 8 is an information terminal including a communicator and carried by a user. The information terminal includes: a situation determiner that determines based on moving machine detection information output from a preset moving machine whether or not the user is in a nearby range preset for the moving machine; a positional information acquirer that acquires positional information indicating a position of the information terminal; and a transmission controller that controls the communicator to transmit the positional information from the information terminal to a preset server in such a transmission mode that whether or not the user is in the nearby range is determinable. The information terminal further includes a position determiner that determines whether or not the positional information acquired by the positional information acquirer satisfies a preset condition. When the situation determiner determines that the user is in the nearby range, and the position determiner determines that the positional information satisfies the preset condition, the transmission controller controls the communicator not to transmit the positional information from the information terminal through the server to a second terminal.

According to the above information terminal, whether or not the user at a position corresponding to the positional information transmitted to the server is in the nearby range of the moving machine is determinable. Thus, the positional information accumulated in the server can be easily utilized as the useful information. For example, the users who are on the moving machines except for the users who are away from the moving machines can be easily found based on the positional information acquired from the server.

A positional information transmitting system according to claim 9 includes: a first terminal carried by a user; a moving machine; a second terminal; and a server communicable with the first terminal and the second terminal. The positional information transmitting system is executed by a computer to transmit positional information of the first terminal from the first terminal through the server to the second terminal. The positional information transmitting system further includes: a situation determiner that determines based on moving machine detection information output from the moving machine whether or not the user is in a nearby range preset for the moving machine; a positional information acquirer that acquires positional information indicating a position of the first terminal; and a transmission controller that controls at least one of the terminal communicator or the server communicator to transmit the positional information from the first terminal through the server to the second terminal in such a transmission mode that whether or not the user is in the nearby range is determinable. The positional information transmitting system further includes a position determiner that determines whether or not the positional information acquired by the positional information acquirer satisfies a preset condition. When the situation determiner determines that the user is in the nearby range, and the position determiner determines that the positional information satisfies the preset condition, the transmission controller controls at least one of the terminal communicator or the server communicator not to transmit the positional information from the first terminal through the server to the second terminal.

According to the above positional information transmitting system, whether or not the user at a position corresponding to the positional information transmitted to the second terminal is in the nearby range of the moving machine is determinable by the second terminal. Thus, the positional information can be easily utilized as the useful information. For example, the users who are on the moving machines except for the users who are away from the moving machines can be easily found by the second terminal based on the server information.

In the positional information transmitting system, the second terminal may include a display, and the display may display a map and a position of the user on the map at a position corresponding to the positional information in such a display mode that whether or not the user is in the nearby range is determinable by the situation determiner. With this, for example, the users who are on the moving machines except for the users who are away from the moving machines can be easily found by the second terminal based on the server information.

In the positional information transmitting system, the second terminal may further include a selection condition storage that stores a selection condition for selecting the user, and the display may display a position of the user in such a display mode that whether or not the selection condition stored by the selection condition storage is satisfied is determinable. According to this configuration, for example, the user can easily find the moving machine that the user wants to find.

In the position display system, the server may store in a storage the positional information received from the first terminal, and the server may delete the positional information from the storage when an elapsed time since the reception of the positional information exceeds a predetermined time. According to this configuration, a ratio of the positional information in a storage capacity of the storage of the server can be reduced.

### Advantageous Effects of Invention

The present invention can provide a positional information transmitting program, an information terminal, and a positional information transmitting system, each of which facilitates the utilization of positional information of terminals accumulated in a server.

### Brief Description of Drawings

FIG. 1 is a schematic diagram showing the outline of a positional information transmitting system according to Embodiment 1.
FIG. 2 is a block diagram showing the configuration of the positional information transmitting system according to Embodiment 1.
FIG. 3 is a flow chart showing one example of the flow of positional information transmission/reception processing according to Embodiment 1.
FIG. 4 is a diagram showing one example of a display screen image of a terminal.
FIG. 5 is a flow chart showing one example of the flow of the positional information transmission/reception processing according to Embodiment 2.
FIG. 6 is a flow chart showing one example of the flow of the positional information transmission/reception processing according to Embodiment 3.

### Description of Embodiments

Hereinafter, positional information transmitting systems according to embodiments will be described with reference to the drawings.

### Embodiment 1

### Outline of Positional Information Transmitting System

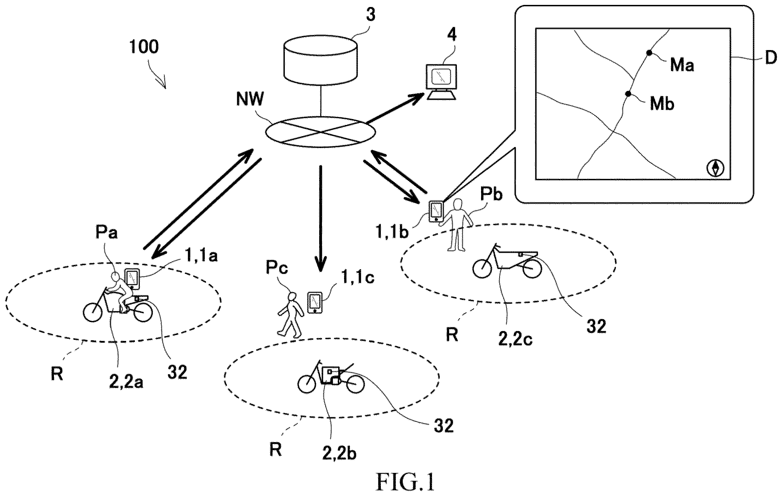

First, the outline of a positional information transmitting system according to Embodiment 1 of the present invention will be described with reference to FIG. 1. FIG. 1 is a schematic diagram of a positional information transmitting system 100 according to Embodiment 1. The positional information transmitting system 100 according to the present embodiment includes terminals 1, moving machines 2, and a server 3.

The terminals 1 are information terminals carried by users. The terminals 1 are, for example, smartphones (multifunctional mobile phones). The terminals 1 can communicate with the server 3 through a network NW. The moving machines 2 are utilized by the users of the terminals 1. In the present embodiment, the moving machines 2 are, for example, motorcycles. The moving machines 2 include respective communicators 32 and can communicate with the terminals 1 of the users.

In the positional information transmitting system 100, preset nearby ranges R are set for the respective moving machines 2. How to determine the size, shape, and the like of the nearby range R may differ depending on each moving machine 2. Each terminal 1 can acquire positional information indicating the position thereof (in other words, the position of the user who carries the terminal 1). The positional information is transmitted or not transmitted from the terminal 1 to the server 3 depending on whether or not the user is in the nearby range R set for the moving machine 2. Specifically, when the user is in the nearby range R preset for the moving machine 2, the positional information of the terminal 1 is transmitted to the server 3. Moreover, when the user is not in the nearby range R preset for the moving machine 2, the positional information of the terminal 1 is not basically transmitted to the server 3.

For example, FIG. 1 shows users Pa, Pb, and Pc among the users who utilize the positional information transmitting system 100. The users Pa, Pb, and Pc carry terminals 1a, 1b, and 1c, respectively. Moreover, the users Pa, Pb, and Pc own moving machines 2a, 2b, and 2c, respectively. Since the users Pa and Pb are in the corresponding nearby ranges R of the moving machines 2a and 2b, the positional information is transmitted from the terminal 1a of the user Pa to the server 3, and the positional information is transmitted from the terminal 1b of the user Pb to the server 3. On the other hand, since the user Pc is not in the corresponding nearby range R of the moving machine 2c, the positional information is not transmitted from the terminal 1c of the user Pc to the server 3.

Moreover, in the positional information transmitting system 100, each terminal 1 can receive the positional information of the other terminals 1 received by the server 3. The reception of the positional information of the terminal 1 can also be performed by a stationary terminal 4 in addition to the mobile terminal 1. FIG. 1 shows one example of a display screen image D of the terminal 1b of the user Pb. The display screen image D shows a map, a marker Mb indicating the position of the user Pb himself/herself, and a marker Ma indicating the position of the terminal 1a of the user Pa who is another user for the user Pb. On the other hand, the display screen image D does not show a marker indicating the position of the user Pc who is not in the nearby range R of the moving machine 2c. As above, the positional information transmitting system 100 can recognize only the position of the user who is in the nearby range R of the moving machine 2.

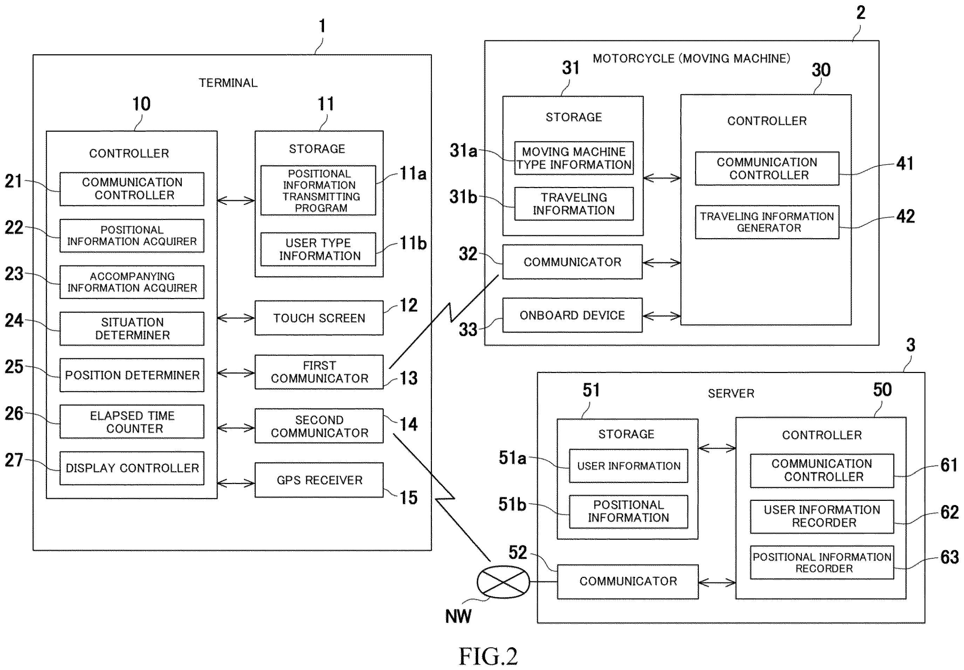

Next, specific configurations of the terminal 1, the moving machine 2, and the server 3 will be described with reference to FIG. 2. FIG. 2 is a block diagram showing the configuration of the positional information transmitting system 100. In FIG. 2, one terminal 1 and one moving machine 2 used by one user are shown among the terminals 1 and the moving machines 2 included in the positional information transmitting system 100.

### Terminal

As shown in FIG. 2, the terminal 1 includes a controller 10, a storage 11, a touch screen 12, a first communicator 13, a second communicator 14, and a GPS receiver 15 in terms of hardware. These components 10 to 15 are connected to each other so as to be able to transmit data to each other.

The controller 10 controls the operation of the terminal 1. The controller 10 includes, for example, a calculation processing unit (CPU; Central Processing Unit).

The storage 11 stores various programs and data for the operation of the terminal 1. The storage 11 includes, for example, a non-volatile memory (such as a ROM) and a volatile memory (such as a RAM). The storage 11 stores a positional information transmitting program 11a and user type information 11b. Details of the positional information transmitting program 11a and the user type information 11b will be described later.

The touch screen 12 serves as both an inputter that receives an operation input from the user and a display that displays a screen image visually recognizable by the user. Specifically, the touch screen 12 includes: a transflective display and a backlight LED (as the display); and a touch panel (as the inputter) arranged on the display.

The first communicator 13 performs wireless communication with a communicator 32 disposed at the moving machine 2. The first communicator 13 includes an antenna, a RF (Radio Frequency) circuit, and the like. In the present embodiment, the wireless communication performed by the first communicator 13 and the communicator 32 is Bluetooth (trademark) communication and is realized by pairing. The pairing is to perform mutual authentication for realizing communication between devices (in the present embodiment, between the first communicator 13 and the communicator 32) such that the devices do not communicate with unrelated nearby devices. The first communicator 13 and the communicator 32 may perform wired communication.

The second communicator 14 performs data communication with a communicator 52 of the server 3 through the network NW by the wireless communication. As described below, the second communicator 14 transmits the positional information of the terminal 1 to the server 3 and receives the positional information of the other terminals 1 from the server 3.

The GPS receiver 15 receives a GPS signal from a GPS (Global Positioning System) satellite and outputs current positional information of the terminal 1.

FIG. 2 also shows functional components of the controller 10 of the terminal 1. The terminal 1 includes a communication controller 21, a positional information acquirer 22, an accompanying information acquirer 23, a situation determiner 24, a position determiner 25, an elapsed time counter 26, and a display controller 27 in terms of functions. These functional components 21 to 27 are realized in such a manner that the controller 10 executes the positional information transmitting program 11a. In other words, the positional information transmitting program 11a makes the controller 10 serve as the above functional components 21 to 27. The functional components 21 to 27 perform positional information transmission/reception processing related to the transmission of the positional information of the terminal 1 and the reception of the positional information of the other terminals 1. For example, the positional information transmitting program 11a is downloaded from the server 3 or another predetermined server as an application program by the wireless communication using the second communicator 14 and stored in the ROM of the storage 11.

The communication controller 21 controls the first communicator 13 to receive information from the moving machine 2. Moreover, the communication controller 21 controls the second communicator 14 to transmit, for example, the positional information of the terminal 1 to the server 3 and receive, for example, the positional information of the other terminals 1 from the server 3.

In the present embodiment, the communication controller 21 transmits or does not transmit the positional information of the terminal 1 to the server 3 depending on whether or not the user is in the nearby range R preset for the moving machine 2. In other words, the communication controller 21 controls the first communicator 13 to transmit the positional information from the terminal 1 to the server 3 in such a transmission mode that whether or not the user is in the nearby range R is determinable.

The positional information acquirer 22 acquires the positional information indicating the position of the terminal 1. Specifically, the positional information acquirer 22 acquires the current positional information of the terminal 1 output from the GPS receiver 15.

The accompanying information acquirer 23 acquires accompanying information that accompanies the positional information of the terminal 1 and is transmitted to the other terminals 1 through the server 3. The accompanying information includes, for example, the user type information 11b, moving machine type information 31a, and traveling information 31b. The accompanying information acquirer 23 corresponds to a "user type acquirer," a "moving machine type acquirer," and a "traveling information acquirer" of the present invention.

The user type information (data) 11b is information corresponding to the type of the user of the terminal 1, the type being specified among user types set in advance in accordance with the characteristics of the users. The user type information 1 1b includes the sex, age, residential area, driving experience, and the like of the user. For example, the user type information 11b is input at the time of user registration performed when the user utilizes positional information transmission/reception service using the positional information transmitting system 100 for the first time. For example, the user type information 11b is input by the operation of the user with respect to the touch screen 12 and is stored in the ROM of the storage 11. The accompanying information acquirer 23 acquires the user type information 1 1b from the storage 11.

The accompanying information acquirer 23 receives and acquires the moving machine type information 31a and the traveling information 31b from the moving machine 2. The moving machine type information (data) 31a is information corresponding to the type of the moving machine 2, the type being specified among the types of the moving machines 2 set in advance. For example, the moving machine type information 31a includes the type, year, and the like of the moving machine 2. The traveling information (data) 31b is information related to the traveling of the moving machine 2. The traveling information 31b is generated by the moving machine 2. Details of the traveling information 31b will be described together with a below-described traveling information generator 42.

Based on moving machine detection information output from the moving machine 2, the situation determiner 24 determines whether or not the user is in the nearby range R preset for the moving machine 2. The moving machine detection information may be information based on which whether or not the user (and the terminal 1 carried by the user) is in the nearby range R preset for the moving machine 2 is determinable. In the present embodiment, the moving machine detection information is an electric signal (for example, a radio wave) transmitted from the communicator 32 of the moving machine 2 to the terminal 1 by wired communication or wireless communication. The electric signal as the moving machine detection information does not have to be a dedicated signal used only by the situation determiner 24 and may be a signal output by the moving machine 2 for other purposes, such as an immobilizer and an ETC (Electronic Toll Collection System).

In the present embodiment, in accordance with a communication state between the first communicator 13 of the terminal 1 and the communicator 32 of the moving machine 2, the situation determiner 24 determines whether or not the user is in the nearby range R preset for the moving machine 2. To be specific, the nearby range R is a range where the first communicator 13 and the communicator 32 can communicate with each other. When the first communicator 13 receives the moving machine detection information from the moving machine 2, the situation determiner 24 determines that the user is in the nearby range R. When the first communicator 13 does not receive the moving machine detection information from the moving machine 2, the situation determiner 24 determines that the user is not in the nearby range R.

The position determiner 25 determines whether or not the positional information acquired by the positional information acquirer 22 satisfies a preset condition. The result of the determination by the position determiner 25 is utilized when the communication controller 21 determines whether to transmit the positional information from the terminal 1 to the server 3.

In the present embodiment, the preset condition is a condition that, for example, a position corresponding to the positional information acquired by the positional information acquirer 22 is in a preset range (hereinafter referred to as a "transmission prohibited range"). For example, the transmission prohibited range is preset by the user through a setting screen image displayed on the touch screen 12. A method of setting the transmission prohibited range is not especially limited. For example, based on address information of the home of the user input in advance by the user at the time of the user registration, the transmission prohibited range may be set as a range within a predetermined distance from a position corresponding to the address information. Or, for example, the transmission prohibited range may be set as a range within a predetermined distance from a position specified by the user on the map displayed on the screen image of the touch screen 12. Or, for example, an area (a city, a town, or the like) as the transmission prohibited range may be specified by the user.

The elapsed time counter 26 counts an elapsed time since the situation determiner 24 has determined that the situation in which the user is in the nearby range R is changed to the situation in which the user is not in the nearby range R. The probability that the moving machine 2 is located close to the position of the terminal 1 is high while an elapsed time since the situation determiner 24 has determined that the user has moved out from the nearby range R is not so long. Therefore, until the elapsed time counted by the elapsed time counter 26 exceeds a predetermined period of time, the positional information transmission/reception processing is performed on the premise that the user is regarded by the situation determiner 24 as being in the nearby range R.

The display controller 27 displays the map on the touch screen 12 that serves as the display. Moreover, the display controller 27 displays the positions of the other users on the map on the touch screen 12 at positions corresponding to the positional information of the terminals 1 of the other users received from the server 3 in such a display mode that whether or not the other users are in the corresponding nearby ranges R is determinable by the situation determiner 24.

### Moving Machine

As mounted devices, the moving machine 2 includes a controller 30, a storage 31, the communicator 32, and onboard devices 33. These components 30 to 33 are connected to each other so as to be able to transmit data to each other. In FIG. 2, the onboard devices 33 are collectively shown by a single block for simplicity.

The controller 30 controls the storing of the information in the storage 31 and the communication of the communicator 32. The controller 30 includes a processing unit (such as a microcomputer), various memories, and the like.

The storage 31 includes a non-volatile memory (such as a ROM) and a volatile memory (such as a RAM). The storage 31 stores the moving machine type information 31a and the traveling information 31b. The moving machine type information 31a and the traveling information 31b are transmitted to the terminal 1 by the communicator 32.

The communicator 32 performs wireless communication with the first communicator 13 of the terminal 1. Since the communicator 32 is similar in configuration to the first communicator 13, the explanation thereof is omitted.

The onboard devices 33 are various sensors and switches mounted on the motorcycle that is the moving machine 2. Examples of the onboard devices 33 include: a bank angle sensor that detects a bank angle of the motorcycle; a vehicle speed sensor that detects a vehicle speed; a rear wheel speed sensor that detects a rear wheel rotational speed; a front wheel speed sensor that detects a front wheel rotational speed; a change gear ratio sensor that detects a change gear ratio of a transmission or a gear position of the transmission; an engine rotational frequency sensor that detects an engine rotational frequency; and an accelerator opening degree sensor that detects an accelerator opening degree (operation amount of an accelerator operating member operated by the user who drives the moving machine 2). Examples of the onboard devices 33 include: a distance sensor that measures an inter-vehicle distance; a front brake pressure sensor that detects front wheel brake pressure; a rear brake pressure sensor that detects rear wheel brake pressure; a brake switch that detects the presence or absence of brake operation; a clutch switch that detects the presence or absence of clutch operation; and a side stand switch that detects lowering/raising of a side stand.

Moreover, FIG. 2 also shows functional components of the controller 30. The controller 30 includes a communication controller 41 and the traveling information generator 42 in terms of function. These functional components 41 and 42 are realized in such a manner that the controller 30 executes a predetermined program stored in the storage 31.

The communication controller 41 controls the communicator 32 to output the moving machine detection information based on which the situation determiner 24 determines whether or not the user is in the nearby range R preset for the moving machine 2. For example, when the terminal 1 executes the positional information transmitting program 11a, the terminal 1 may output a connection request signal, and the communication controller 41 may output the moving machine detection information (signal) as a connection response signal output when the communicator 32 receives the connection request signal. The moving machine detection information may include the moving machine type information 31a and the traveling information 31b stored in the storage 31.

The traveling information generator 42 generates the traveling information 31b related to the traveling of the moving machine 2. The traveling information 3 1b includes a travel distance, tire force, an engine operating time, a user's driving skill, a user's driving technique, and the like. Herein, the tire force denotes force acting on a wheel of the moving machine 2 from a road surface. The tire force includes: vertical force that acts on the wheel in a vertically upward direction; longitudinal force that acts on the wheel in a longitudinal direction (vehicle lengthwise direction); and lateral force that acts on the wheel in a lateral direction (vehicle width direction). The traveling information generator 42 estimates the tire force based on detected values of the onboard devices 33 by a tire force estimating method that is known in the field of motorcycles.

Moreover, for example, the traveling information 31b includes: information indicating whether or not the moving machine 2 is traveling; and a traveling speed of the moving machine 2. The traveling information 31b may include a stop time of the moving machine 2. In this case, the traveling information generator 42 counts an elapsed time since the moving machine 2 has stopped. Examples of the stop time of the moving machine 2 include: an elapsed time since the engine has stopped; an elapsed time since the side stand has lowered; and a period of time in which the positional information of the moving machine does not change. Moreover, the traveling information 31b may include information acquired by the onboard devices 33, vehicle mode setting information, and control information regarding the control of an engine, suspension, brake, and other actuators of the motorcycle that is the moving machine 2.

### Server

The server 3 includes a controller 50, a storage 51, and the communicator 52 in terms of hardware. These components 50 to 52 are connected to each other so as to be able to transmit data to each other.

The controller 50 controls the operation of the server 3. The controller 50 includes, for example, a calculation processing unit.

The storage 51 includes, for example, a non-volatile memory (such as a hard disk or a ROM) and a volatile memory (such as a RAM). The storage 51 stores user information 51a. Moreover, the storage 51 stores positional information 51b received from each terminal 1, in association with the user information 51a.

The communicator 52 communicates with the first communicator 13 of each terminal 1 through the network NW.

FIG. 2 also shows functional components of the controller 50 of the server 3. The controller 50 includes a communication controller 61, a user information recorder 62, and a positional information recorder 63 in terms of function. These functional components 61 to 63 are realized in such a manner that the controller 50 executes various programs stored in the storage 51.

The communication controller 61 receives, for example, the positional information of the terminal 1 from the terminal 1 and transmits, for example, the positional information of the other terminals 1 to the terminal 1.

The user information recorder 62 records the user information 51a of each user in the storage 51, the user information 51a being information of the user who utilizes the positional information transmitting system 100. The user information 51a includes information for identifying the user. For example, the user information 51a includes: a user name that is input at the time of the user registration to identify the user; and a user ID given to the user by the server 3 at the time of the user registration. Moreover, the user information 51a includes the user type information 11b transmitted from the terminal 1. Furthermore, the user information 51a includes the moving machine type information 31a and the traveling information 31b which are transmitted from the moving machine 2 to the terminal 1 and then transmitted from the terminal 1 to the server 3.

The positional information recorder 63 stores the positional information 51b of each user in the storage 51, the positional information 51b being received by the communicator 52 from the terminal 1. Moreover, the positional information recorder 63 deletes the positional information 51b from the storage 51 when an elapsed time since the reception of the positional information 51b exceeds a predetermined time. With this, a ratio of the positional information 51b in a storage capacity of the storage 51 of the server 3 can be reduced.

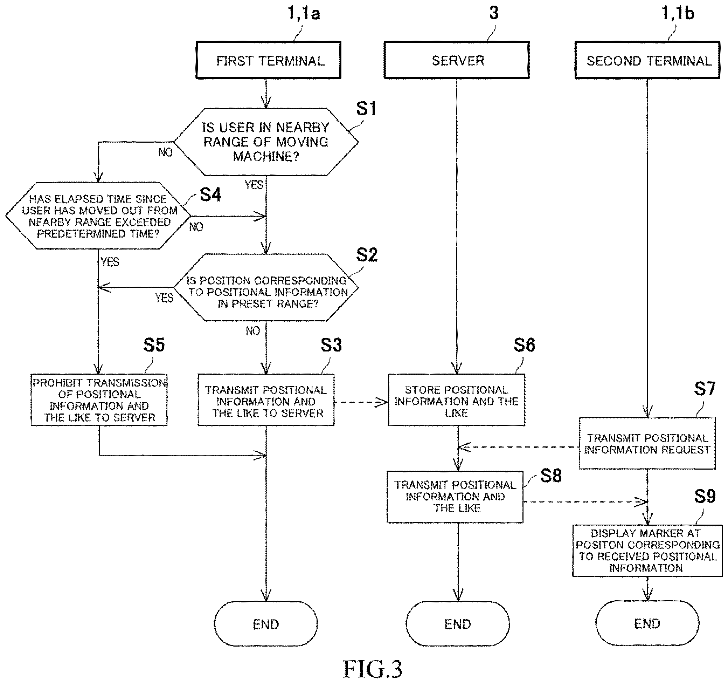

Next, the positional information transmission/reception processing in the positional information transmitting system 100 of the present embodiment will be described with reference to FIG. 3. FIG. 3 is a flow chart showing one example of the flow of the positional information transmission/reception processing. The positional information transmission/reception processing includes: positional information transmission processing related to the transmission of the positional information to the server 3; and positional information reception processing related to the reception of the positional information of the other terminals 1 from the server 3.

For convenience sake, the following will describe an example in which in the positional information transmitting system 100 including, as the terminals 1, the terminal 1a (hereinafter referred to as a "first terminal 1a") carried by the user Pa and the terminal 1b (hereinafter referred to as a "second terminal 1b") carried by the user Pb, the positional information of the first terminal 1a is transmitted to the second terminal 1b through the server 3. To be specific, the following will describe the example in which the positional information transmission processing is performed by the first terminal 1a, and the positional information reception processing is performed by the second terminal 1b.

When the first terminal 1a executes the positional information transmitting program 11a to start the positional information transmission processing, the situation determiner 24 determines based on the moving machine detection information output from the moving machine 2 whether or not the user Pa is in the nearby range R preset for the moving machine 2 (Step S1). Specifically, when the first communicator 13 of the first terminal 1a receives the moving machine detection information from the moving machine 2, the situation determiner 24 determines that the user Pa is in the nearby range R. Moreover, when the first communicator 13 of the first terminal 1a does not receive the moving machine detection information from the moving machine 2, the situation determiner 24 determines that the user Pa is not in the nearby range R.

When the situation determiner 24 determines that the user Pa is in the nearby range R preset for the moving machine 2 (Yes in Step S1), the position determiner 25 determines whether or not the position corresponding to the positional information acquired by the positional information acquirer 22 is in a preset transmission prohibited range (for example, a range around the home of the user Pa) (Step S2).

When the position determiner 25 determines that the position corresponding to the positional information is not in the preset transmission prohibited range (No in Step S2), the communication controller 21 controls the second communicator 14 to transmit the positional information to the server 3 (Step S3). In addition, the communication controller 21 controls the second communicator 14 to transmit the accompanying information together with the positional information to the server 3.

In Step S1, when the situation determiner 24 determines that the user Pa is not in the nearby range R preset for the moving machine 2 (No in Step S1), the communication controller 21 determines whether or not the elapsed time counted by the elapsed time counter 26 has exceeded a predetermined time (Step S4).

When the communication controller 21 determines that the elapsed time has not exceeded the predetermined time (No in Step S4), the processing proceeds to Step S2. To be specific, in the positional information transmission/reception processing of the present embodiment, even when the situation determiner 24 determines that the user Pa is not in the nearby range R preset for the moving machine 2, the same processing as when the situation determiner 24 determines that the user Pa is in the nearby range R is performed until the elapsed time counted by the elapsed time counter 26 exceeds the predetermined time.

When the communication controller 21 determines in Step S4 that the elapsed time has exceeded the predetermined time (Yes in Step S4) or when the position determiner 25 determines in Step S2 that the position corresponding to the positional information is in the preset transmission prohibited range (Yes in Step S2), the communication controller 21 controls the second communicator 14 to prohibit the transmission of the positional information to the server 3 (Step S5).

When the positional information and the accompanying information are transmitted from the first terminal 1a to the server 3 in Step S3, the user information recorder 62 of the server 3 records (or updates) the received accompanying information as the user information 51a, and the positional information recorder 63 of the server 3 stores the received positional information in the storage 51 in association with the user information 51a (Step S6). The positional information recorder 63 deletes the positional information from the storage 51 when the elapsed time since the reception of the positional information exceeds the predetermined time.

When the second terminal 1b executes the positional information transmitting program 11a to start the positional information reception processing, the communication controller 21 transmits a positional information request from the second terminal 1b to the server 3 (Step S7). When the server 3 receives the positional information request, the server 3 transmits the current positional information of the first terminal 1a stored in the storage 51, to the second terminal 1b (Step S8). The server 3 transmits part of the user information 51a stored in association with the current positional information of the first terminal 1a, to the second terminal 1b.

In the second terminal 1b, the display controller 27 displays the map on the touch screen 12 and displays the marker on the map at a position corresponding to the positional information of the first terminal 1a received from the server 3 (Step S9).

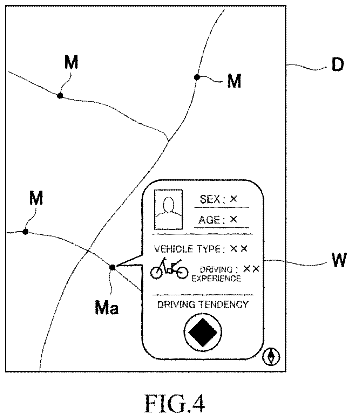

FIG. 4 is a diagram showing one example of the display screen image D of the second terminal 1b. The display screen image D shows the map and the marker Ma on the map at a position corresponding to the positional information of the first terminal 1a received from the server 3. Moreover, the flow chart of FIG. 3 describes only the positional information of the first terminal 1a. However, needless to say, the server 3 also transmits to the second terminal 1b the current positional information of the other terminals 1 stored in the storage 51, and the display screen image D shows the markers M at positions corresponding to the positional information of the other terminals 1. At the positions corresponding to the positional information of the other terminals 1, images (for example, photographic images or illustration images registered by the other users in advance) by which the users can be identified may be shown instead of the markers M.

Moreover, together with the marker Ma indicating the position of the first terminal 1, the display screen image D displays a user information window W that displays the user information received together with the positional information of the first terminal 1a. When the user specifies the marker Ma, such as when the user touches the marker Ma on the touch screen 12, the user information window W is displayed. By displaying the user information window W, the user can know not only the positions of the other users who are near the corresponding moving machines 2 but also, for example, the types of the other users, the types of the moving machines 2 used, driving experience, driving skills, driving tendencies, and the like.

For convenience sake, the foregoing has described that the positional information transmission processing is performed by the first terminal 1a, and the positional information reception processing is performed by the second terminal 1b. However, the first terminal 1a performs not only the positional information transmission processing but also the positional information reception processing, and the second terminal 1b performs not only the positional information reception processing but also the positional information transmission processing. The controller 10 may be able to set on and off of the positional information transmission processing and on and off of the positional information reception processing in accordance with the user's choice such that only one of the positional information transmission processing and the positional information reception processing is executed, and the other is not executed.

As above, according to the positional information transmitting program and the positional information transmitting system of the present embodiment, the positional information of the user Pa (more specifically, the first terminal 1a) is transmitted from the first terminal 1a through the server 3 to the second terminal 1b in such a transmission mode that whether or not the user Pa is in the nearby range R is determinable. To be specific, in the present embodiment, when the user who carries the terminal 1 is not in the nearby range R of the moving machine 2, the positional information is not basically transmitted to the server 3. Therefore, the positional information received by the terminal 1 from the server 3 are basically limited to the current positional information of the other terminals 1 that are in the corresponding nearby ranges R of the moving machines 2. On this account, whether or not the user who is at the position corresponding to the positional information transmitted to the terminal 1 is in the nearby range R of the moving machine 2 is determinable by the terminal 1. Thus, the positional information can be easily utilized as useful information.

The moving machines as leisure vehicles, such as motorcycles, are sophisticated in terms of design and function, and riding on such moving machines is enjoyed as a hobby, not as mere transportation means. Many of the users who ride on the moving machines as the hobby have desires to actually see the moving machines and driving techniques of the other users. In the present embodiment, the terminal 1 receives the current positional information of the other terminals 1 that are in the corresponding nearby ranges R of the moving machines 2. Therefore, when the user moves toward the positions of the other users, the user can easily find the moving machines located close to the other users and can satisfy the desire to actually see the moving machines and driving techniques of the other users.

Moreover, in the present embodiment, the traveling information, moving machine type information, and user type information of the moving machine 2 on which the user rides can be stored in the server 3 and can be utilized as the useful information together with the positional information of the moving machine 2. For example, as shown in FIG. 4, the display screen image displays the positions of the other users and also displays the information of the other users at the positions and the information of the moving machines of the other users, and the user can look for the moving machine that the user wants to see, and can know the information of a person who rides on the moving machine.

Moreover, in the present embodiment, the situation determiner 24 of the terminal 1 can determine whether or not the user is in the nearby range R, by a simple determination method of determining whether or not the moving machine detection information is received from the moving machine 2. Furthermore, the terminal 1 receives the moving machine detection information from the moving machine 2 through wireless communication. Therefore, convenience can be improved more than when, for example, the terminal 1 is physically connected to the moving machine 2.

Moreover, in the present embodiment, when the position determiner 25 determines that the position corresponding to the positional information is in a preset range, the communication controller 21 controls the second communicator 14 to prohibit the transmission of the positional information to the server 3. Therefore, security can be improved.

### Embodiment 2

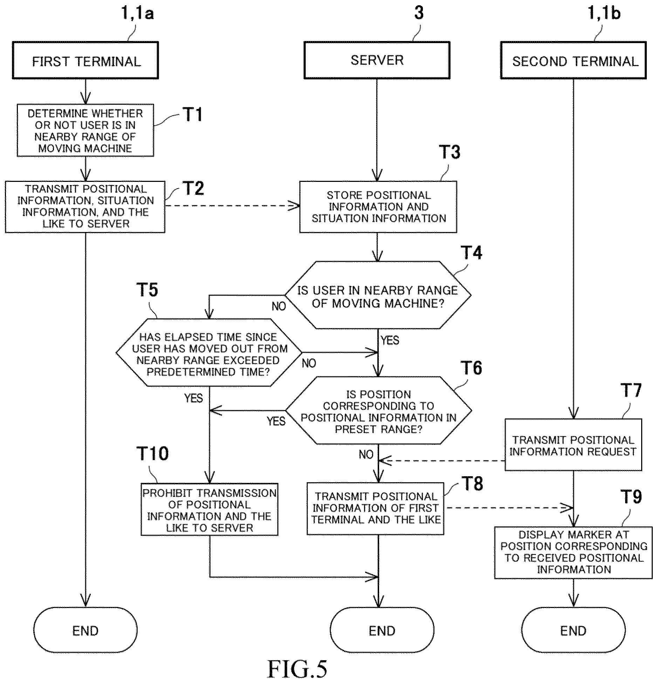

Next, the positional information transmitting system according to Embodiment 2 will be described with reference to FIG. 5.

In the present embodiment, regardless of whether or not the user is in the nearby range R preset for the moving machine 2, the positional information of the terminal 1 is transmitted from the terminal 1 to the server 3. Moreover, in the present embodiment, when the user is not in the nearby range R preset for the moving machine 2, the positional information of the terminal 1 of the user is not basically transmitted from the server 3 to the other terminals 1. To be specific, in the present embodiment, whether to transmit the positional information to the other terminals 1 is determined by the server 3, not by the terminal 1.

In the present embodiment, the server 3 stores a program that is part of the positional information transmitting program 11a. The controller 50 of the server 3 executes this program to determine whether to transmit the positional information to the other terminals 1 and serve as the position determiner 25 and the elapsed time counter 26 of Embodiment 1.

FIG. 5 is a flow chart showing one example of the flow of the positional information transmission/reception processing according to Embodiment 2. As with the positional information transmission/reception processing of FIG. 3, FIG. 5 shows an example in which the positional information of the first terminal 1a is transmitted to the second terminal 1b through the server 3.

In the positional information transmission processing, the situation determiner 24 of the first terminal 1a determines based on the moving machine detection information output from the moving machine 2 whether or not the user Pa is in the nearby range R preset for the moving machine 2 (Step T1).

The communication controller 21 controls the second communicator 14 to transmit the positional information and situation information that is the result of the determination by the situation determiner 24, to the server 3 (Step T2). Moreover, the communication controller 21 controls the second communicator 14 to transmit the accompanying information to the server 3.

In the server 3, the user information recorder 62 records (or updates) the received accompanying information as the user information 51a, and the positional information recorder 63 stores the received positional information and the received situation information in the storage 51 in association with the user information 51a (Step T3). After that, the communication controller 61 determines based on the situation information whether or not the user Pa is in the nearby range R preset for the moving machine 2 (Step T4). When it is determined that the user Pa is not in the nearby range R, whether or not the elapsed time counted by the elapsed time counter 26 has exceeded a predetermined time is determined (Step T5).

When it is determined in Step T4 that the user Pa is in the nearby range R (Yes in Step T4), or when it is determined in Step T5 that the elapsed time has not exceeded the predetermined time (No in Step T5), the position determiner 25 determines whether or not the position corresponding to the received positional information is in a preset transmission prohibited range (Step T6).

When the position determiner 25 determines that the position corresponding to the positional information is not in the preset transmission prohibited range (No in Step T6), the communication controller 61 permits the transmission of the positional information to the other terminals 1. To be specific, when the positional information request is transmitted from the second terminal 1b to the server 3 (Step T7), the communication controller 61 controls the communicator 52 to transmit the positional information to the second terminal 1b (Step T8). Moreover, the communication controller 61 controls the communicator 52 to transmit the accompanying information together with the positional information to the second terminal 1b. In the second terminal 1b, the display controller 27 displays the map on the touch screen 12 and also displays the marker on the map at a position corresponding to the positional information of the first terminal 1a received from the server 3 (Step T9).

When the communication controller 61 determines in Step T5 that the elapsed time has exceeded the predetermined time (Yes in Step T5), or when the position determiner 25 determines in Step T6 that the position corresponding to the positional information is in the preset transmission prohibited range (Yes in Step T6), the communication controller 61 controls the communicator 32 to prohibit the transmission of the positional information to the other terminals 1, such as the second terminal 1b (Step T10).

In the present embodiment, the positional information of the user Pa (more specifically, the first terminal 1a) is transmitted from the first terminal 1a through the server 3 to the second terminal 1b in such a transmission mode that whether or not the user Pa is in the nearby range R is determinable. To be specific, in the present embodiment, the server 3 does not basically transmit the positional information of the user who is not in the nearby range R of the moving machine 2, to the other terminals 1. The positional information received by the terminal 1 from the server 3 are basically limited to the current positional information of the other terminals 1 that are in the corresponding nearby ranges R of the moving machines 2. Therefore, in the present embodiment, the same effects as in Embodiment 1 can be obtained.

### Embodiment 3

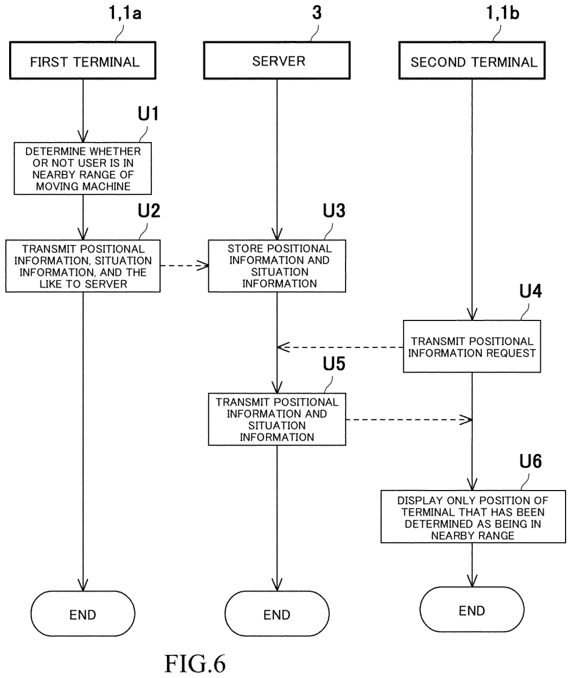

Next, the positional information transmitting system according to Embodiment 3 will be described with reference to FIG. 6.

Each of Embodiments 1 and 2 describes the system in which only the positional information of the user who is in the nearby range R of the moving machine 2 is basically transmitted from the server 3 to the terminal 1. However, in the present embodiment, regardless of whether or not the user is in the nearby range R of the moving machine 2, the positional information of the terminal 1 is transmitted to the other terminals 1 through the server 3. In the terminal 1 that has received the positional information, the touch screen 12 displays the positions of the other users in such a display mode that whether or not the other users are in the corresponding nearby ranges R of the moving machines 2 of the other users are determinable.

FIG. 6 is a flow chart showing one example of the flow of the positional information transmission/reception processing according to Embodiment 3. As with the positional information transmission/reception processing of FIGS. 3 and 5, FIG. 6 shows an example in which the positional information of the first terminal 1a is transmitted to the second terminal 1b through the server 3.

In the positional information transmission processing, the situation determiner 24 of the first terminal 1a determines based on the moving machine detection information output from the moving machine 2 whether or not the user Pa is in the nearby range R preset for the moving machine 2 (Step U1). The communication controller 21 controls the second communicator 14 to transmit the positional information and the situation information that is the result of the determination by the situation determiner 24, to the server 3 (Step U2). Moreover, the communication controller 21 controls the second communicator 14 to transmit the accompanying information together with the positional information to the server 3.

In the server 3, the user information recorder 62 records (or updates) the received accompanying information as the user information 51a, and the positional information recorder 63 stores the received positional information and the received situation information in the storage 51 in association with the user information 51a (Step U3). After that, when the positional information request is transmitted from the second terminal 1b to the server 3 (Step U4), the communication controller 61 controls the communicator 52 to transmit the positional information and situation information of the first terminal 1a to the second terminal 1b (Step U5). The server 3 transmits part of the user information 51a stored in association with the current positional information of the first terminal 1a, to the second terminal 1b.

The display controller 27 displays the map on the touch screen 12 and also display the marker on the map at a position corresponding to the positional information of the first terminal 1a received from the server 3 (Step U6). Moreover, the display controller 27 displays the positions of the other users on the touch screen 12 based on the situation information in such a display mode that whether or not the other users are in the corresponding nearby ranges R of the moving machines 2 of the other users are determinable.

The display mode in which whether or not the other users are in the corresponding nearby ranges R of the moving machines 2 are determinable is not especially limited. For example, the display controller 27 may display the positions of the other users who are in the corresponding nearby ranges R of the moving machines 2 and may not display the positions of the other users who are not in the the corresponding nearby ranges R of the moving machines 2. To be specific, as with Embodiments 1 and 2, the touch screen 12 may display only the positions of the other users who are regarded as being in the corresponding nearby ranges R of the moving machine 2.

Or, the display controller 27 may display the positions of the other users such that the color and shape of the markers of the other users who are in the corresponding nearby ranges R of the moving machines 2 and the color and shape of the markers of the other users who are not in the corresponding nearby ranges R of the moving machines 2 are made different from each other on the map. Whether to use the display mode in which whether or not the other users are in the corresponding nearby ranges R of the moving machines 2 are determinable may be selectable by an operation input of the user with respect to the second terminal 1.

Moreover, in the present embodiment, the terminal 1 includes a selection condition storage in terms of function. The selection condition storage stores in the storage 11 a selection condition for selecting the user. The selection condition is input by, for example, an operation of the user with respect to the terminal 1. The display controller 27 displays the positions of the other users on the touch screen 12 in such a display mode that whether or not the other users corresponding to the positional information received from the server 3 satisfy the selection condition is determinable.

Specifically, the display controller 27 determines based on the user information received together with the positional information whether or not the selection condition is satisfied. For example, when the user inputs the type of the moving machine 2 as the selection condition, the display controller 27 specifies the user information containing information of this type of the moving machine 2 among the user information (moving machine type information) received together with the positional information. For example, the display controller 27 displays the marker M on the map on the touch screen 12 only at a position corresponding to the positional information associated with the user information that satisfies the selection condition. With this, for example, the user can easily find the moving machine 2 that the user actually wants to see.

The server 3 may include the selection condition storage in terms of function. In this case, after the selection condition input to the terminal 1 by the user is transmitted from the terminal 1 to the server 3, the selection condition storage of the server 3 may select the other users that satisfy the received selection condition, and the communication controller 61 of the server 3 may transmit only the positional information of the selected users to the terminal 1.

In the present embodiment, the positional information of the user Pa (more specifically, the first terminal 1a) is transmitted from the first terminal 1a through the server 3 to the second terminal 1b in such a transmission mode that whether or not the user Pa is in the nearby range R is determinable. To be specific, in the present embodiment, the server 3 transmits to the other terminals 1 not only the positional information of the terminal 1 but also the situation information indicating whether or not the user is in the nearby range R preset for the moving machine 2. Therefore, in the terminal 1 that has received the positional information and the situation information, whether or not the users are in the corresponding nearby ranges R is determinable by, for example, displaying on the display only the positions of the users who are in the corresponding nearby ranges R of the moving machines 2. On this account, in the present embodiment, the same effects as in Embodiment 1 can be obtained.

### Other Embodiments

The present invention is not limited to the above-described embodiments, and various modifications may be made within the scope of the present invention.

The terminals 1 carried by the users do not have to be smartphones and may be terminals that do not serve as telephones or electronic mail receivers. For example, the terminals 1 may be different types of mobile computers, such as tablet PCs (Personal Computers) or notebook PCs. The terminal (corresponding to the "second terminal" of the present invention) that receives the positions of the other users does not have to be a mobile terminal and may be a stationary computer 4 as shown by a reference sign 4 in FIG. 1.

In Embodiments 1 to 3, the nearby range R is a range where the first communicator 13 of the terminal 1 and the communicator 32 of the moving machine 2 can communicate with each other. However, the nearby range R is not limited to this. For example, the nearby range R may be a range of a distance between the user on the moving machine 2 and the terminal 1 carried by the user. For example, the situation determiner 24 may determine based on the moving machine detection information output from the moving machine 2 whether or not the user is on the moving machine 2.

Moreover, the moving machine detection information output from the moving machine does not have to be an electric signal and may be vibration, sound, (engine vibration, engine noise) or the like transmitted from the moving machine 2 to the user who is on the moving machine 2. For example, when the moving machine detection information is the engine vibration, and a vibration detector mounted on the terminal 1 detects a certain level or more of vibration, the situation determiner 24 may determine that the user is on the moving machine 2.

The GPS receiver 15 may be disposed at the moving machine 2 instead of the terminal 1. In this case, the positional information acquirer 22 of the terminal 1 may receive and acquire the positional information from the moving machine 2.

The accompanying information does not have to be transmitted from the terminal 1 to the server 3 together with the positional information. For example, the accompanying information may be stored in the server 3 in advance. The accompanying information does not have to include the user type information and/or the moving machine type information.

Moreover, instead of the controller 10 of the terminal 1, the controller 50 of the server 3 may include some of the functional components 21 to 27. To be specific, a computer that executes the positional information transmitting program of the present invention may include the controller 10 of the terminal 1 and the controller 50 of the server 3. For example, the controller 50 of the server 3 may include the situation determiner 24 that determines based on the moving machine detection information output from the moving machine 2 whether or not the user is in the nearby range R preset for the moving machine 2. In this case, the moving machine detection information or information obtained by processing the moving machine detection information is transmitted from the terminal 1 to the server 3, and the situation determiner 24 determines based on this information whether or not the user is in the nearby range R preset for the moving machine 2.

In Embodiments 1 to 3, the motorcycle is described as one example of the moving machine. However, the present invention is applicable to moving machines, such as PWCs (personal watercrafts) and utility vehicles, other than the motorcycles.

### Reference Signs List

- 100: positional information transmitting system
- 1: terminal
- 2: moving machine
- 3: server
- 10: controller (computer)
- 11: storage
- 11a: positional information transmitting program
- 11b: user type information
- 12: touch screen
- 13: first communicator
- 14: second communicator
- 15: GPS receiver
- 21: communication controller (transmission controller)
- 22: positional information acquirer
- 23: accompanying information acquirer
- 24: situation determiner
- 25: position determiner
- 26: elapsed time counter
- 27: display controller
- 30: controller
- 31: storage
- 31a: moving machine type information
- 31b: traveling information
- 32: communicator
- 33: onboard device
- 41: communication controller
- 42: traveling information generator
- 50: controller (computer)
- 51: storage
- 51a: user information
- 51b: positional information
- 52: communicator
- 61: communication controller (transmission controller)
- 62: user information recorder
- 63: positional information recorder
- R: nearby range

## Claims

1. A positional information transmitting program (11a) executed by a computer (10, 50) in a system (100),
the system (100) comprising:
a first terminal (1a) carried by a user;
a moving machine (2);
a second terminal (1b); and
a server (3) including a server communicator (52) communicable with a terminal communicator (14) of the first terminal (1a) and a terminal communicator (14) of the second terminal (1b),
the positional information transmitting program (11a) transmitting positional information of the first terminal (1a) from the first terminal (1a) through the server (3) to the second terminal (1b),
the positional information transmitting program (11a) making the computer (10, 50) serve as:
a situation determiner (24) that determines based on moving machine detection information output from the moving machine (2) whether or not the user is in a nearby range preset for the moving machine (2);
a positional information acquirer (22) that acquires positional information indicating a position of the first terminal (1a); and
a transmission controller (21) that controls at least one of the terminal communicator (14) or the server communicator (52) to transmit the positional information from the first terminal (1a) through the server (3) to the second terminal (1b) in such a transmission mode that whether or not the user is in the nearby range is determinable
**characterized in that**:
the positional information transmitting program (11a) makes the computer (10, 50) further serve as a position determiner (25) that determines whether or not the positional information acquired by the positional information acquirer (22) satisfies a preset condition; and
when the situation determiner (24) determines that the user is in the nearby range, and the position determiner (25) determines that the positional information satisfies the preset condition, the transmission controller (21) controls at least one of the terminal communicator (14) or the server communicator (52) not to transmit the positional information from the first terminal (1a) through the server (3) to the second terminal (1b).

2. The positional information transmitting program (11a) according to claim 1, wherein:
the second terminal (1b) includes a display (12); and
the display (12) displays a map and a position of the user on the map at a position corresponding to the positional information in such a display mode that whether or not the user is in the nearby range is determinable by the situation determiner (24).

3. The positional information transmitting program (11a) according to claim 1 or 2, wherein:
the positional information transmitting program (11a) makes the computer (10, 50) further serve as a traveling information acquirer that is related to traveling of the moving machine (2) and acquires traveling information generated by the moving machine (2); and
the transmission controller (21) controls at least one of the terminal communicator (14) or the server communicator (52) to transmit the traveling information together with the positional information.

4. The positional information transmitting program (11a) according to any one of claims 1 to 3, wherein:
the positional information transmitting program (11a) makes the computer (10, 50) further serve as a moving machine type acquirer that acquires moving machine type information corresponding to a type of the moving machine (2); and
the transmission controller (21) controls at least one of the terminal communicator (14) or the server communicator (52) to transmit the moving machine type information together with the positional information.

5. The positional information transmitting program (11a) according to any one of claims 1 to 4, wherein:
the positional information transmitting program (11a) makes the computer (10, 50) further serve as a user type acquirer that acquires user type information corresponding to a type of the user specified from preset user types; and
the transmission controller (21) controls at least one of the terminal communicator (14) or the server communicator (52) to transmit the user type information together with the positional information.

6. The positional information transmitting program (11a) according to any one of claims 1 to 5, wherein:
the first terminal (1a) includes a receiver that receives moving machine detection information transmitted through wireless communication from a moving machine transmitter disposed at the moving machine (2);
when the receiver receives the moving machine detection information, the situation determiner (24) determines that the user is in the nearby range; and
when the receiver does not receive the moving machine detection information, the situation determiner (24) determines that the user is not in the nearby range.

7. The position display program (11a) according to any one of claims 1 to 6, wherein:
the position display program (11a) makes the computer (10, 50) further serve as an elapsed time counter (26) that counts an elapsed time since the situation determiner (24) has determined that the situation in which the user is in the nearby range is changed to the situation in which the user is not in the nearby range; and
until the elapsed time counted by the elapsed time counter (26) exceeds a predetermined time even when the situation determiner (24) determines that the user is not in the nearby range, the transmission controller (21) controls at least one of the terminal communicator (14) or the server communicator (52) to transmit the positional information from the first terminal (1a) through the server (3) to the second terminal (1b).

8. An information terminal (1) including a communicator (14) and carried by a user, the information terminal (1) comprising:
a situation determiner (24) that determines based on moving machine detection information output from a preset moving machine (2) whether or not the user is in a nearby range preset for the moving machine (2);
a positional information acquirer (22) that acquires positional information indicating a position of the information terminal (1); and
a transmission controller (21) that controls the communicator (14) to transmit the positional information from the information terminal (1) to a preset server (3) in such a transmission mode that whether or not the user is in the nearby range is determinable,
**characterized in that**:
the information terminal (1) further includes a position determiner (25) that determines whether or not the positional information acquired by the positional information acquirer satisfies a preset condition; and
when the situation determiner (24) determines that the user is in the nearby range, and the position determiner (25) determines that the positional information satisfies the preset condition, the transmission controller (21) controls the communicator (14) not to transmit the positional information from the information terminal (1) through the server (3) to a second terminal.

9. A positional information transmitting system (100) comprising:
a first terminal (1a) carried by a user;
a moving machine (2);
a second terminal (1b); and
a server (3) including a server communicator (52) communicable with a terminal communicator (14) of the first terminal (1a) and a terminal communicator (14) of the second terminal (1b),
the positional information transmitting system (100) being executed by a computer (10, 50) to transmit positional information of the first terminal (1a) from the first terminal (1a) through the server (3) to the second terminal (1b),
the positional information transmitting system (100) further comprising:
a situation determiner (24) that determines based on moving machine detection information output from the moving machine (2) whether or not the user is in a nearby range preset for the moving machine (2);
a positional information acquirer (22) that acquires positional information indicating a position of the first terminal (1a); and
a transmission controller (21) that controls at least one of the terminal communicator (14) or the server communicator (52) to transmit the positional information from the first terminal (1a) through the server (3) to the second terminal (1b) in such a transmission mode that whether or not the user is in the nearby range is determinable
**characterized in that**:
the positional information transmitting system (100) further includes a position determiner (25) that determines whether or not the positional information acquired by the positional information acquirer (22) satisfies a preset condition; and
when the situation determiner (24) determines that the user is in the nearby range, and the position determiner (25) determines that the positional information satisfies the preset condition, the transmission controller (21) controls at least one of the terminal communicator (14) or the server communicator (52) not to transmit the positional information from the first terminal (1a) through the server to the second terminal (1b).

10. The positional information transmitting system (100) according to claim 9, wherein:
the second terminal (1b) includes a display (12); and
the display (12) displays a map and a position of the user on the map at a position corresponding to the positional information in such a display mode that whether or not the user is in the nearby range is determinable by the situation determiner (24).

11. The positional information transmitting system (100) according to claim 10, wherein:
the second terminal (1b) further includes a selection condition storage (11) that stores a selection condition for selecting the user; and
the display (12) displays a position of the user in such a display mode that whether or not the selection condition stored by the selection condition storage (11) is satisfied is determinable.

12. The position information transmitting system (100) according to any one of claims 9 to 11, wherein:
the server (3) stores in a storage (51) the positional information received from the first terminal (1a); and
the server (3) deletes the positional information from the storage (51) when an elapsed time since the reception of the positional information exceeds a predetermined time.

## Patentansprüche

1. Programm zum Übertragen von Positionsinformationen (11a), das von einem Computer (10, 50) in einem System (100) ausgeführt wird,
wobei das System (100) umfasst:
eine erste Endeinrichtung (1a), die von einem Benutzer getragen wird;
eine Bewegungsmaschine (2);
eine zweite Endeinrichtung (1b); und
einen Server (3), der einen Serverkommunikator (52) einschließt, der mit einem Endeinrichtungskommunikator (14) der ersten Endeinrichtung (1a) und einem Endeinrichtungskommunikator (14) der zweiten Endeinrichtung (1b) kommunikationsfähig ist,
wobei das Programm zum Übertragen von Positionsinformationen (11a) Positionsinformationen der ersten Endeinrichtung (1a) von der ersten Endeinrichtung (1a) über den Server (3) an die zweite Endeinrichtung (1b) überträgt,
wobei das Programm zum Übertragen von Positionsinformationen (11a) den Computer (10, 50) veranlasst, als Folgendes zu dienen:
ein Situationsbestimmer (24), der auf der Grundlage von von der Bewegungsmaschine (2) ausgegebenen Bewegungsmaschinenerkennungsinformationen bestimmt, ob sich der Benutzer in einem für die Bewegungsmaschine (2) voreingestellten Nahbereich befindet oder nicht;
ein Positionsinformationserwerber (22), der Positionsinformationen erwirbt, die eine Position der ersten Endeinrichtung (1a) angeben; und
ein Übertragungscontroller (21), der mindestens einen von dem Endeinrichtungskommunikator (14) oder dem Serverkommunikator (52) steuert, um die Positionsinformationen von der ersten Endeinrichtung (1a) über den Server (3) an die zweite Endeinrichtung (1b) in einem solchen Übertragungsmodus zu übertragen, dass bestimmbar ist, ob sich der Benutzer in dem Nahbereich befindet oder nicht,
**dadurch gekennzeichnet, dass**:
das Programm zum Übertragen von Positionsinformationen (11a) den Computer (10, 50) veranlasst, ferner als Positionsbestimmer (25) zu dienen, der bestimmt, ob die durch den Positionsinformationserwerber (22) erworbenen Positionsinformationen eine voreingestellte Bedingung erfüllen oder nicht; und wenn der Situationsbestimmer (24) bestimmt, dass sich der Benutzer in dem Nahbereich befindet, und der Positionsbestimmer (25) bestimmt, dass die Positionsinformationen die voreingestellte Bedingung erfüllen, der Übertragungscontroller (21) mindestens einen von dem Endeinrichtungskommunikator (14) oder dem Serverkommunikator (52) steuert, um die Positionsinformationen nicht von der ersten Endeinrichtung (1a) über den Server (3) an die zweite Endeinrichtung (1b) zu übertragen.

2. Programm zum Übertragen von Positionsinformationen (11a) nach Anspruch 1, wobei:
die zweite Endeinrichtung (1b) eine Anzeige (12) einschließt; und
die Anzeige (12) eine Karte und eine Position des Benutzers auf der Karte an einer den Positionsinformationen entsprechenden Position in einem solchen Anzeigemodus anzeigt, dass durch den Situationsbestimmer (24) bestimmbar ist, ob sich der Benutzer in dem Nahbereich befindet oder nicht.

3. Programm zum Übertragen von Positionsinformationen (11a) nach Anspruch 1 oder 2, wobei:
das Programm zum Übertragen von Positionsinformationen (11a) den Computer (10, 50) veranlasst, ferner als Fahrtinformationserwerber zu dienen, der sich auf ein Fahren der Bewegungsmaschine (2) bezieht und von der Bewegungsmaschine (2) erzeugte Fahrtinformationen erwirbt; und
der Übertragungscontroller (21) mindestens einen von dem Endeinrichtungskommunikator (14) oder dem Serverkommunikator (52) steuert, um die Fahrtinformationen zusammen mit den Positionsinformationen zu übertragen.

4. Programm zum Übertragen von Positionsinformationen (11a) nach einem der Ansprüche 1 bis 3, wobei:
das Programm zum Übertragen von Positionsinformationen (11a) den Computer (10, 50) veranlasst, ferner als Bewegungsmaschinentyperwerber zu dienen, der Bewegungsmaschinentypinformationen erwirbt, die einem Typ der Bewegungsmaschine (2) entsprechen; und
der Übertragungscontroller (21) mindestens einen von dem Endeinrichtungskommunikator (14) oder dem Serverkommunikator (52) steuert, um die Bewegungsmaschinentypinformationen zusammen mit den Positionsinformationen zu übertragen.

5. Programm zum Übertragen von Positionsinformationen (11a) nach einem der Ansprüche 1 bis 4, wobei:
das Programm zum Übertragen von Positionsinformationen (11a) den Computer (10, 50) veranlasst, ferner als Benutzertyperwerber zu dienen, der Benutzertypinformationen erwirbt, die einem aus voreingestellten Benutzertypen angegebenen Typ des Benutzers entsprechen; und
der Übertragungscontroller (21) mindestens einen von dem Endeinrichtungskommunikator (14) oder den Serverkommunikator (52) steuert, um die Benutzertypinformationen zusammen mit den Positionsinformationen zu übertragen.

6. Programm zum Übertragen von Positionsinformationen (11a) nach einem der Ansprüche 1 bis 5, wobei:
die erste Endeinrichtung (1a) einen Empfänger einschließt, der über drahtlose Kommunikation von einem an der Bewegungsmaschine (2) angeordneten Bewegungsmaschinensender übertragene Bewegungsmaschinenerkennungsinformationen empfängt;
wenn der Empfänger Bewegungsmaschinenerkennungsinformationen empfängt, der Situationsbestimmer (24) bestimmt, dass sich der Benutzer in dem Nahbereich befindet; und
wenn der Empfänger die Bewegungsmaschinenerkennungsinformationen nicht empfängt, der Situationsbestimmer (24) bestimmt, dass sich der Benutzer nicht in dem Nahbereich befindet.

7. Positionsanzeigeprogramm (11 a) nach einem der Ansprüche 1 bis 6, wobei:
das Positionsanzeigeprogramm (11a) den Computer (10, 50) veranlasst, ferner als Zeitzähler (26) zu dienen, der eine verstrichene Zeit zählt, seit der der Situationsbestimmer (24) bestimmt hat, dass sich die Situation, dass sich der Benutzer in dem Nahbereich befindet, in die Situation geändert hat, dass sich der Benutzer nicht in dem Nahbereich befindet; und
bis die von dem Zeitzähler (26) gezählte verstrichene Zeit eine vorgegebene Zeit überschreitet, selbst wenn der Situationsbestimmer (24) bestimmt, dass sich der Benutzer nicht in dem Nahbereich befindet, der Übertragungscontroller (21) mindestens einen von dem Endeinrichtungskommunikator (14) oder dem Serverkommunikator (52) steuert, um die Positionsinformationen von der ersten Endeinrichtung (1a) über den Server (3) an die zweite Endeinrichtung (1b) zu übertragen.

8. Informationsendeinrichtung (1), die einen Kommunikator (14) einschließt und von einem Benutzer getragen wird,
wobei die Informationsendeinrichtung (1) umfasst:
einen Situationsbestimmer (24), der auf der Grundlage von von einer voreingestellten Bewegungsmaschine (2) ausgegebenen Bewegungsmaschinenerkennungsinformationen bestimmt, ob sich der Benutzer in einem für die Bewegungsmaschine (2) voreingestellten Nahbereich befindet oder nicht;
einen Positionsinformationserwerber (22), der Positionsinformationen erwirbt, die eine Position der Informationsendeinrichtung (1) angeben; und
einen Übertragungscontroller (21), der den Kommunikator (14) steuert, um die Positionsinformationen von der Informationsendeinrichtung (1) an einen voreingestellten Server (3) in einem solchen Übertragungsmodus zu übertragen, dass bestimmbar ist, ob sich der Benutzer in dem Nahbereich befindet oder nicht,
**dadurch gekennzeichnet, dass**:
die Informationsendeinrichtung (1) ferner einen Positionsbestimmer (25) einschließt, der bestimmt, ob die durch den Positionsinformationserwerber erworbenen Positionsinformationen eine voreingestellte Bedingung erfüllen; und
wenn der Situationsbestimmer (24) bestimmt, dass sich der Benutzer in dem Nahbereich befindet, und der Positionsbestimmer (25) bestimmt, dass die Positionsinformationen die voreingestellte Bedingung erfüllen, der Übertragungscontroller (21) den Kommunikator (14) dahin gehend steuert, die Positionsinformationen nicht von der Informationsendeinrichtung (1) über den Server (3) an eine zweite Endeinrichtung zu übertragen.

9. System zum Übertragen von Positionsinformationen (100), umfassend:
eine erste Endeinrichtung (1a), die von einem Benutzer getragen wird;
eine Bewegungsmaschine (2);
eine zweite Endeinrichtung (1b); und
einen Server (3), der einen Serverkommunikator (52) einschließt, der mit einem Endeinrichtungskommunikator (14) der ersten Endeinrichtung (1a) und einem Endeinrichtungskommunikator (14) der zweiten Endeinrichtung (1b) kommunikationsfähig ist,
wobei das System zum Übertragen von Positionsinformationen (100) von einem Computer (10, 50) ausgeführt wird, um Positionsinformationen der ersten Endeinrichtung (1a) von der ersten Endeinrichtung (1a) über den Server (3) an die zweite Endeinrichtung (1b) zu übertragen,
wobei das System zum Übertragen von Positionsinformationen (100) ferner umfasst:
einen Situationsbestimmer (24), der auf der Grundlage von von der Bewegungsmaschine (2) ausgegebenen Bewegungsmaschinenerkennungsinformationen bestimmt, ob sich der Benutzer in einem für die Bewegungsmaschine (2) voreingestellten Nahbereich befindet oder nicht;
einen Positionsinformationserwerber (22), der Positionsinformationen erwirbt, die eine Position der ersten Endeinrichtung (1a) angeben; und
einen Übertragungscontroller (21), der mindestens einen von dem Endeinrichtungskommunikator (14) oder dem Serverkommunikator (52) steuert, um die Positionsinformationen von der ersten Endeinrichtung (1a) über den Server (3) an die zweite Endeinrichtung (1b) in einem solchen Übertragungsmodus zu übertragen, dass bestimmbar ist, ob sich der Benutzer in dem Nahbereich befindet oder nicht,
**dadurch gekennzeichnet, dass**:
das System zum Übertragen von Positionsinformationen (100) ferner einen Positionsbestimmer (25) einschließt, der bestimmt, ob die durch den Positionsinformationserwerber (22) erworbenen Positionsinformationen eine voreingestellte Bedingung erfüllen oder nicht; und
wenn der Situationsbestimmer (24) bestimmt, dass sich der Benutzer in dem Nahbereich befindet, und der Positionsbestimmer (25) bestimmt, dass die Positionsinformationen die voreingestellte Bedingung erfüllen, der Übertragungscontroller (21) mindestens einen von dem Endeinrichtungskommunikator (14) oder dem Serverkommunikator (52) dahin gehend steuert, die Positionsinformationen nicht von der ersten Endeinrichtung (1a) über den Server an die zweite Endeinrichtung (1b) zu übertragen.

10. System zum Übertragen von Positionsinformationen (100) nach Anspruch 9, wobei:
die zweite Endeinrichtung (1b) eine Anzeige (12) einschließt; und
die Anzeige (12) eine Karte und eine Position des Benutzers auf der Karte an einer den Positionsinformationen entsprechenden Position in einem solchen Anzeigemodus anzeigt, dass durch den Situationsbestimmer (24) bestimmbar ist, ob sich der Benutzer in dem Nahbereich befindet oder nicht.

11. System zum Übertragen von Positionsinformationen (100) nach Anspruch 10, wobei:
die zweite Endeinrichtung (1b) ferner einen Auswahlbedingungsspeicher (11) einschließt, der eine Auswahlbedingung zum Auswählen des Benutzers speichert; und
die Anzeige (12) eine Position des Benutzers in einem solchen Anzeigemodus anzeigt, dass bestimmbar ist, ob die von dem Auswahlbedingungsspeicher (11) gespeicherte Auswahlbedingung erfüllt ist oder nicht.

12. System zum Übertragen von Positionsinformationen (100) nach einem der Ansprüche 9 bis 11, wobei:
der Server (3) die von der ersten Endeinrichtung (1a) kommend empfangenen Positionsinformationen in einem Speicher (51) speichert; und
der Server (3) die Positionsinformationen aus dem Speicher (51) löscht, wenn eine seit dem Empfang der Positionsinformationen verstrichene Zeit eine vorgegebene Zeit überschreitet.

## Revendications

1. Programme de transmission d'informations de position (11a) exécuté par un ordinateur (10, 50) dans un système (100),
le système (100) comprenant :
un premier terminal (1a) porté par un utilisateur ;
une machine mobile (2) ;
un second terminal (1b) ; et
un serveur (3) comportant un communicateur de serveur (52) pouvant communiquer avec un communicateur de terminal (14) du premier terminal (1a) et un communicateur de terminal (14) du second terminal (1b),
le programme de transmission des informations de position (11a) transmettant les informations de position du premier terminal (1a) du premier terminal (1a) au second terminal (1b) au travers du serveur (3),
le programme de transmission d'informations de position (1 1a) amenant l'ordinateur (10, 50) à servir de :
déterminateur de situation (24) qui détermine, sur la base d'informations de détection de la machine mobile émises par la machine mobile (2), si l'utilisateur se trouve ou non dans une zone proche prédéfinie pour la machine mobile (2) ;
acquéreur d'informations de position (22) qui acquiert des informations de position indiquant une position du premier terminal (1a) ; et
dispositif de commande de transmission (21) qui commande au moins un des communicateurs de terminal (14) ou le communicateur de serveur (52) pour transmettre les informations de position du premier terminal (1a) au second terminal (1b) au travers du serveur (3) dans un mode de transmission tel qu'il est possible de déterminer si l'utilisateur se trouve ou non dans la zone de proximité
**caractérisé en ce que** :
le programme de transmission d'informations de position (11a) amène l'ordinateur (10, 50) à servir en outre de déterminateur de position (25) qui détermine si les informations de position acquises par l'acquéreur d'informations de position (22) satisfont ou non à une condition prédéfinie ; et
lorsque le déterminateur de situation (24) détermine que l'utilisateur se trouve dans la zone de proximité, et que le déterminateur de position (25) détermine que les informations de position satisfont à la condition prédéfinie, le dispositif de commande de transmission (21) commande à au moins un du communicateur de terminal (14) ou du communicateur de serveur (52) de ne pas transmettre les informations de position du premier terminal (1a) au second terminal (1b) au travers du serveur (3).

2. Programme de transmission d'informations de position (11a) selon la revendication 1, dans lequel :
le second terminal (1b) comporte un écran (12) ; et
l'écran (12) affiche une carte et une position de l'utilisateur sur la carte à un emplacement correspondant aux informations de position dans un mode d'affichage tel que le déterminateur de situation (24) peut déterminer si l'utilisateur se trouve ou non dans la zone de proximité.

3. Programme de transmission d'informations de position (11a) selon la revendication 1 ou 2, dans lequel :
le programme de transmission d'informations de position (11a) fait en sorte que l'ordinateur (10, 50) serve en outre d'acquéreur d'informations de déplacement liées au déplacement de la machine mobile (2) et acquiert des informations de déplacement générées par la machine mobile (2) ; et
le dispositif de commande de transmission (21) commande à au moins un du communicateur de terminal (14) ou du communicateur de serveur (52) de transmettre les informations de déplacement en même temps que les informations de position.

4. Programme de transmission d'informations de position (11a) selon l'une quelconque des revendications 1 à 3, dans lequel :
le programme de transmission d'informations de position (1 1a) amène l'ordinateur (10, 50) à servir en outre d'acquéreur de type de machine mobile qui acquiert des informations de type de machine mobile correspondant à un type de la machine mobile (2) ; et
le dispositif de commande de transmission (21) commande à au moins un du communicateur de terminal (14) ou du communicateur de serveur (52) de transmettre les informations de type de machine mobile en même temps que les informations de position.

5. Programme de transmission d'informations de position (11a) selon l'une quelconque des revendications 1 à 4, dans lequel :
le programme de transmission d'informations de position (1 1a) amène l'ordinateur (10, 50) à servir en outre d'acquéreur de type d'utilisateur qui acquiert des informations de type d'utilisateur correspondant à un type de l'utilisateur spécifié à partir de types d'utilisateurs prédéfinis ; et
le dispositif de commande de transmission (21) commande à au moins un du communicateur de terminal (14) ou du communicateur de serveur (52) de transmettre les informations de type d'utilisateur en même temps que les informations de position.

6. Programme de transmission d'informations de position (11a) selon l'une quelconque des revendications 1 à 5, dans lequel :
le premier terminal (1a) comporte un récepteur qui reçoit des informations de détection de machine mobile transmises par communication sans fil à partir d'un émetteur de machine mobile placé au niveau de la machine mobile (2) ;
lorsque le récepteur reçoit les informations de détection de la machine mobile, le déterminateur de situation (24) détermine que l'utilisateur se trouve dans la zone de proximité ; et
lorsque le récepteur ne reçoit pas les informations de détection de machine mobile, le dispositif de détermination de situation (24) détermine que l'utilisateur ne se trouve pas dans la zone de proximité.

7. Programme d'affichage de position (11a) selon l'une quelconque des revendications 1 à 6, dans lequel :
le programme d'affichage de la position (11a) amène l'ordinateur (10, 50) à servir en outre de compteur de temps écoulé (26) qui compte le temps écoulé depuis que le déterminateur de situation (24) a déterminé que la situation dans laquelle l'utilisateur se trouve dans la zone de proximité est passée à la situation dans laquelle l'utilisateur ne se trouve pas dans la zone de proximité ; et
jusqu'à ce que le temps écoulé compté par le compteur de temps écoulé (26) dépasse un temps prédéterminé, même lorsque le déterminateur de situation (24) détermine que l'utilisateur n'est pas dans la zone de proximité, le dispositif de commande de transmission (21) commande à au moins un communicateur de terminal (14) ou un communicateur de serveur (52) de transmettre les informations de position du premier terminal (1a) au second terminal (1b) par l'intermédiaire du serveur (3).

8. Terminal d'information (1) comportant un communicateur (14) et porté par un utilisateur,
le terminal d'information (1) comprenant :
un déterminateur de situation (24) qui détermine, sur la base d'informations de détection de machine mobile émises par une machine mobile prédéfinie (2), si l'utilisateur se trouve ou non dans une zone de proximité prédéfinie pour la machine mobile (2) ;
un acquéreur d'informations de position (22) qui acquiert des informations de position indiquant une position du terminal d'information (1) ; et
un dispositif de commande de transmission (21) qui commande au communicateur (14) de transmettre les informations de position du terminal d'information (1) à un serveur prédéfini (3) dans un mode de transmission tel qu'il est possible de déterminer si l'utilisateur se trouve ou non dans la zone de proximité,
**caractérisé en ce que** :
le terminal d'information (1) comporte en outre un déterminateur de position (25) qui détermine si les informations de position acquises par l'acquéreur d'informations de position satisfont ou non à une condition prédéfinie ; et
lorsque le déterminateur de situation (24) détermine que l'utilisateur se trouve dans la zone de proximité et que le déterminateur de position (25) détermine que les informations de position satisfont à la condition prédéfinie, le dispositif de commande de transmission (21) commande au communicateur (14) de ne pas transmettre les informations de position du terminal d'information (1) à un second terminal au travers du serveur (3).

9. Système de transmission d'informations de position (100) comprenant :
un premier terminal (1a) porté par un utilisateur ;
une machine mobile (2) ;
un second terminal (1b) ; et
un serveur (3) comportant un communicateur de serveur (52) pouvant communiquer avec un communicateur de terminal (14) du premier terminal (1a) et un communicateur de terminal (14) du second terminal (1b),
le système de transmission d'informations de position (100) étant exécuté par un ordinateur (10, 50) pour transmettre des informations de position du premier terminal (1a) du premier terminal (1a) au second terminal (1b) au travers du serveur (3),
le système de transmission d'informations de position (100) comprenant en outre :
un déterminateur de situation (24) qui détermine, sur la base d'informations de détection de machine mobile émises à partir de la machine mobile (2), si l'utilisateur se trouve ou non dans une zone de proximité prédéfinie pour la machine mobile (2) ;
un acquéreur d'informations de position (22) qui acquiert des informations de position indiquant une position du premier terminal (1a) ; et
un dispositif de commande de transmission (21) qui commande à au moins un du communicateur de terminal (14) ou du communicateur de serveur (52) pour transmettre les informations de position du premier terminal (1a) au second terminal (1b) au travers du serveur (3) dans un mode de transmission tel qu'il est possible de déterminer si l'utilisateur se trouve ou non dans la zone de proximité
**caractérisé en ce que** :
le système de transmission d'informations de position (100) comporte en outre un déterminateur de position (25) qui détermine si les informations de position acquises par l'acquéreur d'informations de position (22) satisfont ou non à une condition prédéfinie ; et
lorsque le déterminateur de situation (24) détermine que l'utilisateur se trouve dans la zone de proximité, et que le déterminateur de position (25) détermine que les informations de position satisfont à la condition prédéfinie, le dispositif de commande de transmission (21) commande à au moins l'un du communicateur de terminal (14) ou du communicateur de serveur (52) de ne pas transmettre les informations de position du premier terminal (1a) au second terminal (1b) au travers du serveur.

10. Système de transmission d'informations de position (100) selon la revendication 9, dans lequel :
le second terminal (1b) comporte un écran (12) ; et
l'écran (12) affiche une carte et une position de l'utilisateur sur la carte à une position correspondant aux informations de position dans un mode d'affichage tel que le déterminateur de situation (24) peut déterminer si l'utilisateur se trouve ou non dans la zone de proximité.

11. Système de transmission d'informations de position (100) selon la revendication 10, dans lequel :
le second terminal (1b) comporte en outre un stockage de conditions de sélection (11) qui stocke une condition de sélection pour sélectionner l'utilisateur ; et
l'écran (12) affiche une position de l'utilisateur dans un mode d'affichage tel qu'il est possible de déterminer si la condition de sélection stockée par le stockage de condition de sélection (11) est remplie ou non.

12. Système de transmission d'informations de position (100) selon l'une quelconque des revendications 9 à 11, dans lequel :
le serveur (3) stocke dans un stockage (51) les informations de position reçues du premier terminal (1a) ; et
le serveur (3) supprime les informations de position du stockage (51) lorsqu'un temps écoulé depuis la réception des informations de position dépasse une durée prédéterminée.
